# EUROPÄISCHE PATENTSCHRIFT

(11) **EP 3 678 891 B1**
(45) Veröffentlichungstag und Bekanntmachung des Hinweises auf die Patenterteilung: **06.08.2025**
(21) Anmeldenummer: 18778807.0
(22) Anmeldetag: 05.09.2018
(51) Int. Cl.: B60L 53/30

(54) **SYSTEM ZUM INDUKTIVEN LADEN EINES ELEKTRISCHEN FAHRZEUGS**
SYSTEM FOR INDUCTIVELY CHARGING AN ELECTRIC VEHICLE
SYSTÈME SERVANT AU CHARGEMENT PAR INDUCTION D'UN VÉHICULE ÉLECTRIQUE

(30) Priorität: 05.09.2017 DE 102017008343
(43) Veröffentlichungstag der Anmeldung: 15.07.2020
(73) Patentinhaber: Kempka, Reinhold, 41468 Neuss (DE); Kempka, Patrick, 41470 Neuss (DE)
(72) Erfinder: Kempka, Reinhold, 41468 Neuss (DE); Kempka, Patrick, 41470 Neuss (DE)
(74) Vertreter: Hoffmann Eitle
(86) Internationale Anmeldenummer: PCT/EP2018/073818
(87) Internationale Veröffentlichungsnummer: WO 2019/048453

(56) Entgegenhaltungen:
- WO-A1-2013/142866
- WO-A1-2017/061863
- DE-A1- 102009 024 721
- NL-C2- 1 038 495
- US-A1- 2011 298 422
- US-A1- 2012 095 617
- US-A1- 2013 307 477

## Beschreibung

Die Erfindung betrifft ein System zum induktiven Laden einer Batterie eines elektrischen Fahrzeugs sowie Verwendungsmöglichkeiten für ein solches System. Ferner betrifft die Erfindung ein Verfahren zum Einbau eines solchen Systems in einen Boden. Ein System nach dem Oberbegriff des Anspruchs 1 ist aus WO 2013/142866A1 und US 2011/422 A1 bekannt.

Es sind Systeme zum induktiven Laden von elektrischen Fahrzeugen bekannt, bei denen eine Induktionsvorrichtung verwendet wird. Im Gegensatz zu Ladestationen, bei denen das Fahrzeug zum Aufladen mit der Ladestation mittels eines Ladekabels verbunden werden muss, erfolgt die induktive Ladung berührungslos. Dabei umfasst die Induktionsvorrichtung üblicherweise eine Spule, die Primärspule genannt wird. Indem durch die Primärspule ein Wechselstrom fließt, wird ein Magnetfeld um die Primärspule erzeugt. Wenn sich in der Nähe dieses Magnetfeldes eine zweite Spule eines elektrischen Fahrzeuges (Sekundärspule) befindet, wird durch die ständige Umpolung des Magnetfeldes der Primärspule, die durch den Wechsel der Stromrichtung bedingt ist, auch ein Wechselstrom in der Sekundärspule induziert. Durch einen Gleichrichter wird dieser Wechselstrom in Gleichstrom umgewandelt und dem Akkumulator des Fahrzeuges zugeführt, wodurch sich dieser auflädt. Die Induktionsvorrichtung befindet sich üblicherweise auf oder unter dem Boden. Zum Aufladen muss sich das Fahrzeug derart über der Induktionsvorrichtung positionieren, dass sich die Sekundärspule im Magnetfeld der Primärspule befindet.

Derartige Systeme sind oft nur mit dem Nötigsten ausgestattet, nämlich mit der Primärspule und einem Stromnetzanschluss. Die Primärspule wird dabei häufig in die Fahrbahnoberfläche eingebettet (eingegossen). Zudem wird Platz für die Steuer- und Abrechnungselektronik benötigt, die üblicherweise oberirdisch in Schaltschränken untergebracht sind. Somit wird der knappe öffentliche Raum weiter eingeengt. Das Herstellen derartiger Systeme im öffentlichen Raum ist aufwendig. Zudem ist es kostenintensiv, da das System für jeden Aufstellungsort neu ausgelegt wird. Diese Nachteile behindern den flächendeckenden Einsatz derartiger Systeme. Diese und andere Systeme belasten zudem beim Ladevorgang das öffentliche Stromnetz, das in den Städten nicht annähernd genügend Leistung liefert. Somit müssten künftig alle Stromnetze verstärkt werden, was einen enormen finanziellen und logistischen Aufwand bedeutet.

Aufgabe der Erfindung ist es daher, ein System vorzuschlagen, dass sich günstig installieren lässt.

Die Aufgabe wird gemäß den Gegenständen der nebengeordneten Ansprüche gelöst. Vorteilhafte Ausführungsformen der vorliegenden Erfindung sind Gegenstand der jeweils abhängigen Patentansprüche und ergeben sich aus der nachfolgenden Beschreibung.

Kerngedanke der Erfindung ist die Bereitstellung eines Behälters, wobei sich die Induktionsvorrichtung in oder an einem Teil der Behälterwand befindet. Dadurch wird Raum geschaffen für die Unterbringung und den Anschluss nützlicher Komponenten. Außerdem bietet der Einsatz eines Behälters die Chance einer Standardisierung. Mit der Erfindung wird die Möglichkeit geschaffen, alle Komponenten in, bzw. an einem einzigen, als solches handhabbaren Gut (dem Behälter) unterzubringen. Dies vereinfacht die Aufstellung des Systems. Den Straßenbauern wird der Behälter als solches angeliefert mit der Aufgabe, ihn nach festlegbaren, immer wiederkehrenden Regeln in eine vordefinierte Grube einzubringen. Daneben ist nur noch der elektrische Anschluss des Behälters an das Stromnetz notwendig. Dadurch kann die Installationszeit und damit die ggf. notwendige Störung des öffentlichen Lebens erheblich reduziert werden. Ferner steht zu erwarten, dass durch eine Standardisierung der Abläufe beim Einbau diese rascher und ohne Komplikationen durchgeführt werden können - für jedes neu zu installierende System müssen die Straßenbauer nur die gleichen, bereits gelernten Schritte vollziehen.

Die Möglichkeit der Standardisierung bietet auch herstellerseitig Vorteile. So ist es denkbar, herstellerseitig nur eine einzige Behältergröße oder beispielsweise eine überschaubare, geringe Zahl von unterschiedlichen Behältergrößen anzubieten, die somit in Serie gefertigt werden können. Möglicherweise auftretende Fragen der Stabilität, der Materialwahl, der Abdichtung können somit einmalig abgearbeitet werden und müssen nicht bei der Schaffung eines neuen Systems erneut durchgegangen werden. Die "Zusatzausstattung" der Behälter, also die neben der Induktionsvorrichtung ggf. zusätzlich in oder an dem Behälter vorzusehenden Betriebsvorrichtungen oder Ausstattungsmittel können dann kundenspezifisch in, bzw. an dem Behälter vorgesehen werden. So ist es denkbar, dass einige Kunden, bspw. einige Gemeinden oder Kommunen nur den flächendeckenden Einsatz einer Basisversion, bspw. nur einer Version mit Induktionsvorrichtung und Anschluss für das Stromnetz wünschen, während andere ein aufwendiger ausgestattetes System wünschen. Unter Rückgriff auf den gleichen, in Serie gefertigten Behälter, können diese Wünsche individuell berücksichtigt werden, ohne an dem Behälter etwas ändern zu müssen (der Behälter bleibt bei den Kunden, die nur eine Basisversion wünschen, somit möglicherweise nahezu leer, was unnötig erscheint, aber aufgrund der ggf. möglichen Kosteneinsparung bei der Serienherstellung der Behälter wieder herausgeholt werden kann). Des Weiteren bietet der Behälter Platz zur Unterbringung von anderen Infrastruktureinrichtungen wie Stromversorgungs- und Sicherungskästen mit Ferndiagnose und Schaltmöglichkeiten zur Versorgung der Haushalte oder Fernmelde- und Kommunikationseinrichtungen.

Das System eignet sich zum induktiven Laden der Batterie eines elektrischen Fahrzeuges. Der Begriff "elektrisches Fahrzeug" im Sinne der Erfindung umfasst alle Fahrzeuge, die zumindest teilweise elektrisch angetrieben werden. Hierzu gehören auch Hybridelektrofahrzeuge. Als Fahrzeugart kommen beispielsweise Personenkraftwagen, Motorräder oder Busse infrage.

Die Induktionsvorrichtung im Sinne der Erfindung umfasst sämtliche Induktionsvorrichtungen aus dem Stand der Technik, die zum induktiven Laden eines Fahrzeuges geeignet sind. Üblicherweise umfasst die Induktionsvorrichtung eine Spule, durch die Wechselstrom fließt, und die Primärspule genannt wird. Die Induktionsvorrichtung ist üblicherweise als rechteckige Platte ausgebildet, wobei andere Formen denkbar sind. Außer den derzeit bekannten Induktionsvorrichtungen können zukünftig leistungsstärkere Induktionsvorrichtungen nachgerüstet werden.

Die Induktionsvorrichtung befindet sich in oder an der Behälterwand. Sie kann sich vollständig im Inneren der Behälterwand befinden oder teilweise in der Behälterwand befinden und aus der Behälterwand herausragen. Denkbar ist auch eine Anordnung, bei der die Induktionsvorrichtung an der Behälterwand angebracht ist. Die Ausführungsform, bei der sich die Induktionsvorrichtung teilweise in der Behälterwand befindet und in Richtung des Äußeren des Behälters aus der Behälterwand herausragt sowie die Ausführungsform, bei der die Induktionsvorrichtung an der äußeren Behälterwand angeordnet ist, haben den Vorteil, dass die Position der Induktionsvorrichtung sichtbar ist, was die Positionierung eines Fahrzeuges über der Induktionsvorrichtung erleichtert. Bei der Ausführungsform, bei der sich der Behälter vollständig in der Behälterwand befindet und deshalb nach außen unsichtbar ist, kann der Teil der Behälterwand, über den sich die Induktionsvorrichtung erstreckt (Erstreckungsfläche) durch eine Markierung der Erstreckungsfläche kenntlich gemacht werden. Eine Markierung einer nach außen unsichtbaren Induktionsvorrichtung ist ggf. nicht notwendig, wenn im Fahrzeug oder in einem Schnittstellengerät, bspw. einem Smartphone oder einem Navigationssystem, eine Anzeige vorgesehen ist, die das Ergebnis eines Ausrichtungstests zeigt, die die Lage des Fahrzeugs relativ zur Induktionsvorrichtung überprüft. Ein Ausrichtungstest kann über die Interaktion zwischen einer Primärspule in der Induktionsvorrichtung und einer Sekundärspule an dem Fahrzeug die Lage der Sekundärspule relativ zur Primärspule feststellen und somit die Ausrichtung des Fahrzeugs relativ zur Induktionsvorrichtung feststellen. Ein Ausrichtungstest kann auch durch andere Mittel bereitgestellt werden, bspw. Drucksensoren oder Lichtschranken. Künftig autonom fahrende Fahrzeuge werden mittels eines Steuersignals aus einer Vorrichtung, die im Behälter untergebracht ist, automatisch in die optimale Ladeposition gebracht. Das anschließende Laden und Abrechnen funktioniert dann auch mittels Vorrichtungen, die im Behälter untergebracht sind.

Der Behälter kann grundsätzlich jede Form haben. Praktischerweise ist er quaderförmig, was die Unterbringung von Vorrichtungen und Mittel in den Behälter sowie den Transport und die Einsetzung in eine Grube vereinfacht. Zudem besitzt ein quaderförmiger Behälter die Eigenschaft, dass seine Seiten eben sind. Das macht sich vorteilhaft bemerkbar, wenn eine seiner Seiten als Stellplatzfläche oder Fahrbahnoberfläche verwendet wird. Vorteilhafterweise richtet sich seine Größe nach der Stellplatzfläche, in die er eingesetzt wird. Eine übliche Größe (Länge x Breite x Höhe) ist z. B.: ca. 5 m x 1,5 m x 0,6 m.

Der Begriff "Behälterwand" im Sinne der Erfindung umfasst alle den Behälter nach außen abgrenzende Flächen, wozu z. B. auch der Boden gehört.

In einer vorteilhaften Ausführungsform bildet ein Teil der Behälterwand einen Deckel zum Öffnen und Schließen des Behälters, wobei der Teil der Behälterwand, in oder an dem sich die Induktionsvorrichtung befindet (Behälterwandteil), der Deckel ist. In einer bevorzugten Ausführungsform weist der Behälter eine geschlossene Wanne und den Deckel auf. Die geschlossene Wanne kann durch Leitungsöffnungen und/oder Lüftungsöffnungen und/oder einen Wasserauslass durchbrochen sein.

In einer bevorzugten Ausführungsform liegt der Deckel auf einem Absatz auf, der durch weitere Teile des Behälters, insbesondere eine in einer bevorzugten Ausführungsform vorgesehenen Wanne, gebildet wird. Als Teil des Absatzes kann eine Stufe ausgebildet sein. Das Vorsehen einer Stufe kann das Abdichten des Behälters vereinfachen.

Der Begriff "Behälterwandteil" im Sinne der Erfindung umfasst somit den Teil der Behälterwand, in oder an dem sich die Induktionsvorrichtung befindet. Er ist nicht notwendigerweise auf die Erstreckungsfläche beschränkt. Der Behälterwandteil umfasst die Erstreckungsfläche, ist üblicherweise aber größer als diese.

Dadurch, dass die Behälterwand einen Deckel aufweist, kann der Behälter bei Bedarf geöffnet und geschlossen werden. Ein solcher Bedarf kann beispielsweise vorliegen, wenn defekte Vorrichtungen ausgetauscht oder neue Komponenten hinzugefügt werden müssen. Da der Deckel vorteilhafterweise als Teil einer Stellplatzfläche oder Fahrbahnoberfläche dient, weist er zweckmäßigerweise eine ebene Form auf. Der Deckel kann eine Platte, insbesondere eine Betonplatte sein. Er kann auch mehrteilig sein, z. B. um verschiedene Kammern im Behälter zu verschließen.

Der Deckel und der Rest des Behälters können aus dem gleichen Material oder aus verschiedenen Materialien bestehen. Geeignete Materialien sind z. B. Beton, Stahlbeton, Faserbeton, Aluminium, Stahl, Kunststoff oder verstärkter Kunststoff. Vorteilhafterweise handelt es sich um wasserdichtes Material. In einer bevorzugten Ausführungsform ist der Behälter zumindest teilweise an seinen Außenwänden oder seinen Innenwänden, insbesondere bevorzugt am Deckel beschichtet. So kann es sich zeigen, dass der Deckel, wenn seine Oberfläche einen Teil der Fahrbahn oder den Teil eines Stellplatzes bildet, besondere Reibwerte bereitstellen muss, die ein gutes Befahren mit einem Fahrzeug erlauben. Werden diese Reibwerte mit dem Material, aus dem der Deckel ggf. aus konstruktiven Gründen (Tragfähigkeit, Stabilität, Dauerhaftigkeit) oder Kostengründen (Materialeinsatz) im wesentlichen hergestellt wird, nicht erreicht, so können sie durch das Vorsehen einer Beschichtung auf dem Deckel bereitgestellt werden, ohne die Vorzüge, die durch das eigentlich eingesetzte Material erreicht werden, zu verlieren.

Der Behälter weist einen Akkumulator zum Betreiben der Induktionsvorrichtung auf. Damit wird eine weitere Energiequelle neben dem Stromnetz bereitgestellt. Elektrische Fahrzeuge können somit auch bei Ausfall des Stromnetzes aufgeladen werden, was die Zuverlässigkeit des Systems erhöht. Grundsätzlich können alle Akkumulatoren verwendet werden, die geeignet sind, ein elektrisches Fahrzeug zu laden. In einigen Akkumulatoren, insbesondere Bleiakkumulatoren, können sich explosive Gase bilden. Hierbei ist es zweckmäßig, dass das System eine Entlüftungsmöglichkeit bietet. Das System kann auch mindestens eine Kammern bildende Trennwand im Behälter aufweisen, die es ermöglicht, den Akkumulator separat in einer Kammer unterzubringen.

Der Akkumulator ist so ausgebildet, dass er Energie aus dem Stromnetz speichern und Energie in das Stromnetz einspeisen kann. Seit langem bemüht sich die Fachwelt um eine Lösung für das Problem der Stromnetzschwankungen. Dieses Problem verschärft sich dadurch, dass der Anteil der erneuerbaren Energien an der Stromerzeugung zunimmt. Weil die Stromerzeugung aus regenerativen Energiequellen insbesondere von dem kaum vorhersehbaren Wetter abhängt, kommt es zu oft zu einem Stromüberschuss, der nicht in das Stromnetz eingespeist werden kann, ohne die Netzstabilität zu gefährden. So müssen beispielsweise Windkraftanlagen ausgeschaltet werden, obwohl genügend Wind weht. Eine Lösung für das Problem bieten Pumpspeicherkraftwerke, die aber üblicherweise das Vorhandensein von zwei größeren benachbarten Seen auf unterschiedlichen Höhen voraussetzen. Eine flächendeckende Lösung kann deshalb mit ihnen nicht erzielt werden.

Eine flächendeckende Lösung kann aber mithilfe dieser Ausführungsform der Erfindung erzielt werden, die in Zukunft die Entwicklung der Netzwerkstabilisierungstechnik deutliche beschleunigen und damit das volle Potential der erneuerbaren Energiequellen nutzbar machen kann. Der Akkumulator kann Energie aus dem Stromnetz speichern, wenn die Stromerzeugung größer ist als der Stromverbrauch (z. B. wegen überschüssiger Energie aus Wind- und Sonnenkraft) und Energie in das Stromnetz einspeisen, wenn die Stromerzeugung kleiner ist als der Stromverbrauch (z. B. nachts). Damit trägt er zur Netzwerkstabilität bei. Besonders wirkungsvoll ist diese Lösung, wenn Systeme zum induktiven Laden von elektrischen Fahrzeugen, die mit einem derartigen Akkumulator ausgestattet sind, flächendeckend verfügbar sind. Davon ist in Zukunft auszugehen:
Denn es zeichnet sich ab, dass einerseits die Elektromobilität in den nächsten Jahren stark zunehmen wird und damit einhergehend der Bedarf an Ladestellen. Zum anderen zeichnet sich auch ab, dass das induktive Laden aufgrund seiner Vorteile gegenüber den heute noch verbreiteten Ladestationen die dominierende Ladetechnik sein wird, allein schon deshalb, weil Systeme zum induktiven Laden nahezu überall eingesetzt werden können. Induktionsvorrichtungen können grundsätzlich unter jeder Straße installiert werden, sodass ein Aufladen beim Parken oder Stehen des Fahrzeuges an der Ampel jederzeit möglich ist, ohne dass der Autofahrer aussteigen und ein Ladekabel anschließen muss. Zudem sind Ladekabel nicht erforderlich, sodass auch Unfälle beispielsweise durch Stolpern über diese Kabel nicht befürchtet werden müssen. Ebenso werden Kabel im Laufe der Zeit immer brüchiger, was die Gefahr des Stromschlages für Verkehrsteilnehmer birgt.

Die Modalitäten für das Speichern der Energie aus dem Stromnetz und für die Rückspeisung der Energie in das Stromnetz können nach Bedarf mit den Energieversorgungsunternehmen abgestimmt werden. Diese können beispielsweise die technischen und finanziellen Bedingungen sowie die Energiemengen für die Ein- und Rückspeisungen betreffen.

Bevorzugt weist der Behälter mindestens eine Betriebsvorrichtung auf. Der Begriff "Betriebsvorrichtung" im Sinne der Erfindung umfasst Vorrichtungen und Mittel zum nützlichen Betreiben des Systems, die aber für den reinen Ladevorgang nicht unbedingt notwendig sind. Eine Betriebsvorrichtung kann z. B. dem Zweck der Abrechnung mit dem Kunden oder der Steuerung und Regelung des Systems dienen. Daher umfasst der Begriff Betriebsvorrichtung insbesondere elektrische und elektronische Vorrichtungen, Vorrichtungen der Steuerungs-, Regelungs-, Mess-, Überwachungstechnik, Vorrichtungen und Mittel der Softwaretechnik. Beispiele hierfür sind ein Ladegerät für den Akkumulator, Wechselrichter, Gleichspannungswandler und Stromverbinder zum Parallelschalten mehrerer Systeme, Mittel zum Kühlen elektronischer Vorrichtungen. Ein weiteres Beispiel für eine Betriebsvorrichtung ist eine Software zur Implementierung der mit dem Energieversorgungsunternehmen abgestimmten Modalitäten für das Speichern der Energie aus dem Stromnetz und für die Rückspeisung der Energie in das Stromnetz. Weitere Beispiele für Betriebsvorrichtungen sind eine Ladestandanzeige zum Anzeigen des Ladestandes des Fahrzeugs und eine Betriebsstandanzeige zum Anzeigen des Betriebsstandes des Systems.

Je nach Bedarf kann das System modular mithilfe des Behälters aufgebaut werden. Seine Komponenten sind insbesondere die Betriebsvorrichtungen, der Akkumulator und Ausstattungsmittel (s.u.).

In einer weiteren Ausführungsform kann der Deckel einen Vorsprung aufweisen, der eine Bordsteinkante sein kann. Dadurch braucht eine Bordsteinkante am Stellplatz- oder Fahrbahnrand nicht vor dem Einbau des Systems vorhanden zu sein, sondern wird gleichzeitig mit dem System eingebaut. Zudem kann die Bordsteinkante als nützlicher Träger von Systemelementen fungieren.

Beispielsweise ist es vorteilhaft, dass sich die Ladestandanzeige und/oder die Betriebsstandanzeige am Vorsprung befindet, sodass der Fahrer beim Laden die Ladestandanzeige sehen kann, ohne das Fahrzeug verlassen zu müssen und/oder den Betriebszustand des Systems schon vor oder beim Anfahren des Stellplatzes sehen kann.

In einer weiteren Ausführungsform ist ein Teil der Betriebsvorrichtung eine Entwässerungsvorrichtung. Die Entwässerungsvorrichtung kann ein Kiesbett umfassen, das unter dem Behälter angeordnet ist. Das Kiesbett kann ca. 20 cm hoch sein. Die Entwässerungsvorrichtung kann auch Drainagerohre umfassen, die Wasser aus dem Behälterinneren nach außen, insbesondere in Richtung des Kiesbetts, leiten können. Die Entwässerungsvorrichtung kann Mittel zur Messung des Füllstandes des Wassers im Behälter und eine Pumpe zum Herauspumpen des Wassers aus dem Behälter umfassen.

Zweckmäßigerweise ist das System so ausgebildet, dass der Deckel den Behälter wasserdicht verschließt. Da sich das System üblicherweise in einem Boden befindet, besteht die Gefahr, dass seine Komponenten einen Wasserschaden aufgrund sickerndes Regenoder Hochwasser erleiden. Eine dichte Abdeckung trägt dazu bei, derartige Schäden zu vermeiden.

Um ferner Wasserschäden an den elektrischen Vorrichtungen zu vermeiden, können diese wasserdicht ausgelegt sein. Zudem ist eine Feuchtigkeitsüberwachung denkbar. Möglich ist auch die Einbettung der elektrischen Vorrichtungen in wasserdichtem Gel. Alternativ können die elektrischen Vorrichtungen (mit Ausnahme des in oder an der Behälterwand angeordneten Induktionsvorrichtung) außerhalb des Behälters angeordnet sein, was insbesondere in Hochwassergebieten in Betracht kommen kann. Beispielsweise können die in einer bevorzugten Ausführungsform vorgesehnen Akkumulatoren in einer solchen Anordnung auch außerhalb des Behälters und höherliegend vorgesehen sein. Das erhöht im Hinblick auf in dem Behälter angeordnete Akkumulatoren zwar den Aufwand für das Aufstellen dieses Systems, die durch die Standardisierungsmöglichkeit gewonnen Vorzüge bei der Auslegung der Induktionsvorrichtung, des Behälters und/oder des Anschluss an das Stromnetz können aber auch bei einer solchen Anordnung weiterhin genutzt werden.

In einer weiteren Ausführungsform umfasst das System mindestens eine weitere Induktionsvorrichtung. Dadurch kann eine weitere Ladestelle bereitgestellt werden. Zum Beispiel kann durch die Induktionsvorrichtung, die sich im Behälter befindet, ein Fahrzeug auf einem Stellplatz geladen werden, während durch eine zweite Induktionsvorrichtung ein Fahrzeug auf einem benachbarten Stellplatz geladen werden kann. Ein Vorteil dieser Ausführungsform ist, dass die Versorgung durch den Akkumulator und die Betriebsvorrichtungen im Behälter erfolgen kann, sodass ein zweiter Behälter mit seinem gesamten Inhalt für die zweite Induktionsvorrichtung nicht nötig ist. Beispielsweise ist es denkbar, neben dem Behälter des erfindungsgemäßen Systems einen weiteren Deckel vorzusehen, in oder an dem die zweite Induktionsvorrichtung vorgesehen ist, und nur diesen weiteren Deckel zu verlegen und ihn elektrisch mit dem durch einen ersten Deckel mit Induktionsvorrichtung geschlossenen Behälter anzubinden. Insbesondere bevorzugt sind bei einem System mit zwei Induktionsvorrichtungen jedoch zwei Behälter vorgesehen, ein erster Behälter, in oder an dessen Behälterwand sich die erste Induktionsvorrichtung befindet, und ein zweiter Behälter, in oder an dessen Behälterwand sich die zweite Induktionsvorrichtung befindet. Wird ein System mit zwei Induktionsvorrichtungen und zwei Behältern eingesetzt, so können in einer bevorzugten Ausführungsform elektrische Verbindungen zwischen den Behältern vorgesehen sein, so dass beispielsweise beide Induktionsvorrichtung mit einem einzigen Akkumulator verbunden werden können, oder beide Induktionsvorrichtung beispielsweise mit einer einzigen Steuerung angesteuert werden können. Es sind auch Ausführungsformen denkbar, bei denen mechanischen Verbindungselemente, insbesondere Stecksysteme vorgesehen werden, mit denen zwei Behälter zur elektrischen Kopplung aneinander zusammengesteckt werden können. Diese können bei besonders schwachen Stromnetzen zum Einsatz kommen.

In einer weiteren Ausführungsform umfasst das System mindestens ein Ausstattungsmittel für Straßen und Parkplätze oder einen Anschluss für dieses Ausstattungsmittel. Ausstattungsmittel für Straßen und Parkplätze sind beispielsweise Straßenbeleuchtungsmittel, Straßenschilder und Begrenzungsbügel. Als Straßenbeleuchtungsmittel kommen beispielsweise LED-Straßenlaternen mit Dämmungsregelung in Betracht. Ausstattungsmittel, die elektrische Energie benötigen, wie z. B. Straßenlaternen und beleuchtete Straßenschilder, können durch den Akkumulator und die Betriebsvorrichtungen versorgt werden. Bevorzugt weist das System, insbesondere die Ausstattungsmittel, einen Ladeanschluss zum Laden elektrischer Fahrzeuge und Geräte auf. So können beispielsweise elektrische Fahrräder, Motorräder oder Handys geladen werden. Die Versorgung erfolgt dabei vorzugsweise auch durch den Akkumulator. Als Ausstattungsmittel, an dem der Ladeanschluss angebracht ist, kann beispielsweise ein Begrenzungsbügel dienen. Ein Begrenzungsbügel kann beipielsweise ein Bügel sein, der zum Vegetationsschutz, insbesondere zum Schutz von Bäumen an Rändern von Stellplätzen vorgesehen wird.

Die Erfindung schafft auch eine Verwendung des erfindungsgemäßen Systems als Untergrund für einen Stellplatz, wobei der Behälterwandteil, insbesondere der Deckel, als Teil der Stellplatzfläche dient. Als Stellplatz wird vorliegend eine Fläche zum Abstellen eines Fahrzeuges verstanden. Vorliegend umfasst der Begriff somit auch Parkstände. Ein Parkplatz hingegen umfasst mehrere Stellplätze.

Vorteilhafterweise schließt der Behälterwandteil bündig mit der Stellplatzfläche ab, wobei der Rest des Behälters unter der Stellplatzfläche angeordnet ist. Der Behälterwandteil kann einen Teil oder die gesamte Stellplatzfläche umfassen. Vorzugsweise weist der Behälterwandteil die Größe einer Standardstellplatzfläche auf, die z. B. in den Garagenverordnungen oder Sonderbauverordnungen der deutschen Bundesländer geregelt ist und etwa von der Aufstellungsart (z. B. Längs- oder Schrägaufstellung) abhängt.

Die Erfindung schafft auch eine Verwendung des erfindungsgemäßen Systems, wobei das System Teil der Fahrbahn ist und der Behälterwandteil, insbesondere der Deckel, einen Teil der Fahrbahnoberfläche bildet. Vorteilhafterweise schließt der Behälterwandteil bündig mit der Fahrbahnoberfläche ab, wobei der Rest des Behälters unter der Fahrbahnoberfläche angeordnet ist. Vorzugsweise bildet der Behälterwandteil an der Stelle den Teil der Fahrbahnoberfläche, an der Fahrzeuge üblicherweise zum Stehen kommen, wie z. B. vor einer Ampel oder einem Zebrastreifen. Dadurch befindet sich das stehende Fahrzeug über eine längere Dauer über der Induktionsvorrichtung, sodass die Ladedauer erhöht werden kann.

Die Erfindung schafft auch ein Verfahren zum Einbau des erfindungsgemäßen Systems in einen Boden, wobei eine Grube ausgehoben wird und das System in die Grube eingesetzt wird. Als Boden kommen insbesondere der Untergrund von Stellplätze und Fahrbahnoberflächen in Betracht. Das System kann dabei derart in die Grube eingesetzt werde, dass es sich vollständig oder teilweise in dem Boden befindet. Gegebenenfalls wird die Grube geschlossen, z. B. durch Asphaltieren oder Pflastern. Wenn der Behälterwandteil, insbesondere der Deckel, einen Teil des Bodens bildet, dient dieser vorzugsweise zumindest teilweise als Verschluss der Grube.

Die Erfindung wird nachfolgend anhand der Figuren, die lediglich vorteilhafte Ausführungsformen der Erfindung zeigen, näher erläutert. Darin zeigt:
- Fiq. 1a: eine perspektivische Ansicht eines beispielshaften Systems zum induktiven Laden eines elektrischen Fahrzeugs
- Fig. 1b: einen Querschnitt des beispielhaften Systems nach Fig. 1a
- Fig. 2: einen Querschnitt eines zweiten beispielhaften Systems

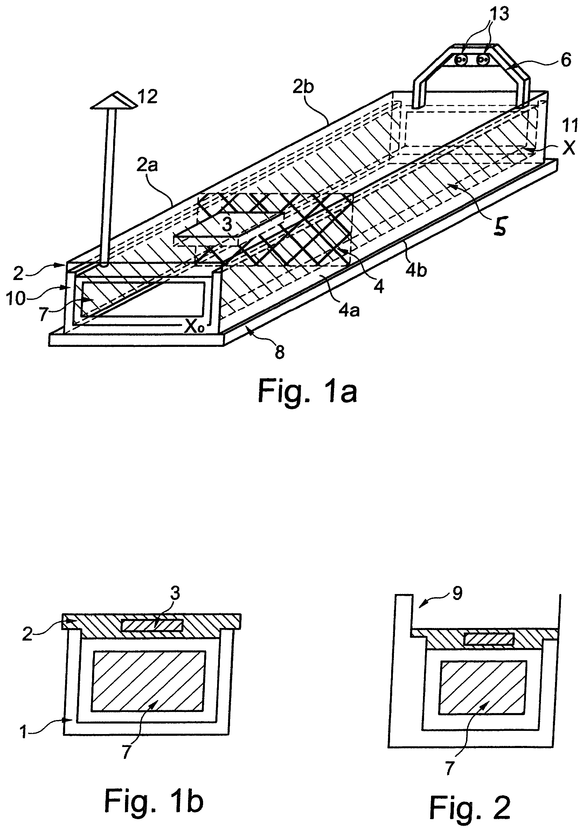

Figur 1 zeigt eine perspektivische Ansicht eines beispielshaften Systems 1 zum induktiven Laden eines elektrischen Fahrzeugs. Es umfasst einen Behälter 10, der durch eine Trennwand 4 zwei Kammern 4a und 4b umfasst. Ein Teil der Behälterwand bildet einen Deckel 2. Der Deckel ist in dieser beispielhaften Ausführungsform zweiteilig. Ein Teil des Deckel 2a verschließt die Kammer 4a, der andere Teil des Deckels 2b verschließt die Kammer 4b. Ferner umfasst das System 1 eine Induktionsvorrichtung 3 in Form einer rechteckigen Ladeplatte und einen Akkumulator 5, der sich in der Kammer 4b befindet. Der Akkumulator 5 ist mit einem Stromnetz (nicht dargestellt) verbunden und ist derart ausgebildet, dass er Energie aus dem Stromnetz speichern und Energie in das Stromnetz einspeisen kann. Dadurch kann er zur Stabilisierung des Stromnetzes beitragen. Die Induktionsvorrichtung 3 ist in diesem Ausführungsbeispiel sowohl mit dem Stromnetz als auch mit dem Akkumulator 5 verbunden. Somit kann beim Ausfall einer Energiequelle (z. B. Ausfall des Stromnetzes oder zu kleine momentane Netzleistung) eine andere Energiequelle (Akkumulator 5) zum Betreiben der Induktionsvorrichtung genutzt werden.

Das System weist ferner diverse Betriebsvorrichtungen auf, die im vorliegenden Ausführungsbeispiel überwiegend in der Kammer 4a in einem Kasten 7 untergebracht sind. Hierzu gehören z. B. die Leistungselektronik und die Softwaretechnik. Des Weiteren umfasst das System eine Entwässerungsvorrichtung. Diese weist einen Wasserablauf 11 und ein Kiesbett 8 auf, sodass Wasser aus dem Behälter abfließen kann.

Das System umfasst ferner als Ausstattungsmitteln für Straßen und Parkplätze eine LED-Laterne 12 mit Dämmungsregelung. Diese ist über den Behälter mit dem System verbunden und wird über den Akkumulator 5 bzw. das Stromnetz versorgt sowie mittels der Betriebsvorrichtungen betrieben. Ein weiteres Ausstattungsmittel ist ein Begrenzungsbügel 6. Dieser ist mit zwei Ladeanschlüssen 13 versehen, sodass elektrische Fahrzeuge wie E-Bikes und elektrische Geräte wie Handys aufgeladen werden können. Die Ladeanschlüsse 13 sind ebenfalls mit dem Stromnetz bzw. dem Akkumulator verbunden.

Fig. 1b zeigt einen Querschnitt der Ausführungsform nach Fig. 1a. Die Induktionsvorrichtung 3 befindet sich in diesem Ausführungsbeispiel vollständig in der Deckelwand.

Fig. 2 zeigt einen Querschnitt einer zweiten beispielhaften Ausführungsform des Systems. Sie unterscheidet sich von der ersten Ausführungsform dadurch, dass der Behälter 10 eine Vorsprung 9 aufweist, der eine Bordsteinkante sein kann.

## Patentansprüche

1. Modulares System zum induktiven Laden einer Batterie eines elektrischen Fahrzeugs, umfassend eine Induktionsvorrichtung (3), einen Anschluss für ein Stromnetz zur Versorgung der Induktionsvorrichtung (3) und einen Behälter (10), wobei sich
∘ in einer Basisversion des Systems die Induktionsvorrichtung (3) in oder an der Behälterwand befindet, wobei ein Teil der Behälterwand einen Deckel (2) zum Öffnen und Schließen des Behälters (10) bildet, wobei der Teil der Behälterwand, in oder an dem sich die Induktionsvorrichtung (3) befindet (Behälterwandteil), der Deckel (2) ist,
**dadurch gekennzeichnet, dass** in dem Behälter (10) Raum geschaffen ist für die Unterbringung und den Anschluss zusätzlicher Komponenten, nämlich in dem Behälter (10) Raum geschaffen ist für die Unterbringung und den Anschluss eines Akkumulators (5) zum Betreiben der Induktionsvorrichtung (3), wobei der Akkumulator (5) so ausgebildet ist, dass er Energie aus dem Stromnetzt speichern und Energie in das Stromnetz einspeisen kann und in oder an dem Behälter (10) Raum geschaffen ist für die Unterbringung und den Anschluss zumindest eines der nachstehend aufgezählten Element
∘ einen Stromversorgungs- oder Sicherungskasten mit Ferndiagnose und Schaltmöglichkeiten zur Versorgung der Haushalte oder Fernmelde- und Kommunikationseinrichtungen
∘ ein Ausstattungsmittel für Straßen und Parkplätze oder einen Anschluss für das Ausstattungsmittel, nämlich ein Straßenbeleuchtungsmittel und/oder ein beleuchtetes Straßenschild und/oder einen zur Induktionsvorrichtung (3) unterschiedlichen Ladeanschluss (13) zum Laden elektrischer Fahrzeuge und Geräte.

2. System nach Anspruch 1, wobei der Behälter (10) einen Akkumulator (5) zum Betreiben der Induktionsvorrichtung (3) aufweist, wobei der Akkumulator (5) so ausgebildet ist, dass er Energie aus dem Stromnetzt speichern und Energie in das Stromnetz einspeisen kann.

3. System nach Anspruch 1 oder 2, wobei ein Ausstattungsmittel für Straßen und Parkplätze oder einen Anschluss für das Ausstattungsmittel vorgesehen ist, nämlich ein Straßenbeleuchtungsmittel und/oder ein beleuchtetes Straßenschild und/oder einen zur Induktionsvorrichtung (3) unterschiedlichen Ladeanschluss (13) zum Laden elektrischer Fahrzeuge und Geräte.

4. System nach Anspruch 2, **dadurch gekennzeichnet, dass** der Behälter (10) eine geschlossene Wanne und einen Deckel (2) aufweist.

5. System nach einem der vorigen Ansprüche, wobei der Behälter (10) eine Betriebsvorrichtung aufweist.

6. System nach Anspruch 5, wobei ein Teil der Betriebsvorrichtung eine Entwässerungsvorrichtung ist.

7. System nach einem der vorigen Ansprüche, wobei das System (1) so ausgebildet ist, dass der Deckel (2) den Behälter (10) wasserdicht verschließt.

8. System nach einem der vorigen Ansprüche, wobei der Behälter (10) einen Vorsprung (9) aufweist, der eine Bordsteinkante sein kann.

9. System nach einem der vorigen Ansprüche, umfassend eine zweite Induktionsvorrichtung für die Ladung eines zweiten Fahrzeugs.

10. System nach Anspruch 1, wobei das Ausstattungsmittel elektrische Energie benötigt und über den Stromnetzanschluss und/oder durch den Akkumulator (5) versorgt werden kann.

11. Verwendung des Systems (1) nach einem der vorigen Ansprüche als Untergrund für einen Stellplatz, wobei der Behälterwandteil als Teil der Stellplatzfläche dient.

12. Verwendung des Systems (1) nach einem der Ansprüche 1 bis 10, wobei das System Teil einer Fahrbahn ist, wobei der Behälterwandteil einen Teil der Fahrbahnoberfläche bildet.

13. Verfahren zum Einbau des Systems (1) nach einem der Ansprüche 1 bis 10 in einen Boden, wobei eine Grube ausgehoben wird und das System (1) in die Grube eingesetzt wird.

## Claims

1. Modular system for the inductive charging of a battery of an electric vehicle, comprising an induction device (3), a connection for a power grid to supply the induction device (3) and a container (10), wherein
∘ in a basic version of the system, the induction device (3) is located in or on the container wall, wherein a part of the container wall forms a lid (2) for opening and closing the container (10), wherein the part of the container wall in or on which the induction device (3) is located (container wall section) is the lid (2),
**characterised in that** space is created within the container (10) for housing and connecting additional components, namely space is created within the container (10) for housing and connecting a storage battery (5) for operating the induction device (3), wherein the storage battery (5) is configured to be able to store energy from the power grid and feed energy back into the power grid and space is created in or on the container (10) for housing and connecting at least one of the elements listed below
∘ a power supply box or fuse box with remote diagnostics and switching capabilities for supplying households or telecommunications and communication facilities,
∘ an equipment means for roads and parking spaces or a connection for the equipment means, namely a street lighting means and/or an illuminated road sign and/or a charging connection (13) different from the induction device (3) for charging electric vehicles and appliances.

2. System according to Claim 1, wherein the container (10) comprises a storage battery (5) for operating the induction device (3), wherein the storage battery (5) is configured so as to be able to store energy from the power grid and feed energy back into the power grid.

3. System according to Claim 1 or 2, wherein an equipment means for roads and parking spaces or a connection for the equipment means is provided, namely a street lighting means and/or an illuminated road sign and/or a charging connection (13) different from the induction device (3) for charging electric vehicles and appliances.

4. System according to Claim 2, **characterised in that** the container (10) comprises a sealed basin and a lid (2).

5. System according to any one of the preceding claims, wherein the container (10) comprises an operating device.

6. System according to Claim 5, wherein a part of the operating device is a drainage device.

7. System according to any one of the preceding claims, wherein the system (1) is configured in such a manner that the lid (2) seals the container (10) in a watertight manner.

8. System according to any one of the preceding claims, wherein the container (10) has a protrusion (9) which may be a kerbstone.

9. System according to any one of the preceding claims, comprising a second induction device for charging a second vehicle.

10. System according to Claim 1, wherein the equipment means requires electrical energy and can be supplied via the power grid connection and/or by the storage battery (5).

11. Use of the system (1) according to any one of the preceding claims as a base for a parking space, wherein the container wall section acts as part of the parking surface.

12. Use of the system (1) according to any one of Claims 1 to 10, wherein the system is part of a roadway, wherein the container wall section forms part of the road surface.

13. Method for installing the system (1) according to any one of Claims 1 to 10 in the ground, wherein a pit is excavated and the system (1) is inserted into the pit.

## Revendications

1. Système modulaire pour la charge inductive d'une batterie d'un véhicule électrique, comprenant un dispositif d'induction (3), une connexion à un réseau électrique pour alimenter le dispositif d'induction (3) et un récipient (10), dans lequel,
∘ dans une version de base du système, le dispositif d'induction (3) se trouve dans ou sur la paroi du récipient, une partie de la paroi du récipient formant un couvercle (2) pour ouvrir et fermer le récipient (10), la partie de la paroi du récipient dans ou sur laquelle se trouve le dispositif d'induction (3) (partie de paroi du récipient) étant le couvercle (2),
**caractérisé en ce que** de l'espace est prévu dans le récipient (10) pour le logement et le raccordement de composants supplémentaires, à savoir de l'espace est prévu dans le récipient (10) pour le logement et le raccordement d'un accumulateur (5) pour le fonctionnement du dispositif d'induction (3), l'accumulateur (5) étant conçu de telle sorte qu'il peut stocker de l'énergie provenant du réseau électrique et injecter de l'énergie dans le réseau électrique et de l'espace est prévu dans ou sur le récipient (10) pour le logement et le raccordement d'au moins l'un des éléments énumérés ci-dessous
∘ un boîtier d'alimentation électrique ou de fusibles avec diagnostic à distance et possibilités de commutation pour l'alimentation des ménages ou des installations de télécommunication et de communication
∘ un moyen d'équipement pour les routes et les emplacements de stationnement ou un raccordement pour le moyen d'équipement, à savoir un moyen d'éclairage des routes et/ou un panneau routier éclairé et/ou un raccordement de charge (13) différent du dispositif d'induction (3) pour la charge de véhicules et d'appareils électriques.

2. Système selon la revendication 1, dans lequel le récipient (10) présente un accumulateur (5) pour faire fonctionner le dispositif d'induction (3), l'accumulateur (5) étant conçu pour stocker de l'énergie provenant du réseau électrique et pour injecter de l'énergie dans le réseau électrique.

3. Système selon la revendication 1 ou 2, dans lequel il est prévu un moyen d'équipement pour les routes et les parkings ou un raccordement pour le moyen d'équipement, à savoir un moyen d'éclairage des routes et/ou un panneau routier éclairé et/ou un raccordement de charge (13) différent du dispositif d'induction (3) pour la charge de véhicules et d'appareils électriques.

4. Système selon la revendication 2, **caractérisé en ce que** le récipient (10) présente une cuve fermée et un couvercle (2).

5. Système selon l'une des revendications précédentes, dans lequel le récipient (10) présente un dispositif de fonctionnement.

6. Système selon la revendication 5, dans lequel une partie du dispositif de fonctionnement est un dispositif de drainage.

7. Système selon l'une des revendications précédentes, dans lequel le système (1) est conçu de telle sorte que le couvercle (2) ferme le récipient (10) de manière étanche à l'eau.

8. Système selon l'une des revendications précédentes, dans lequel le récipient (10) comporte une saillie (9) qui peut être une bordure de trottoir.

9. Système selon l'une des revendications précédentes, comprenant un deuxième dispositif d'induction pour la charge d'un deuxième véhicule.

10. Système selon la revendication 1, dans lequel le moyen d'équipement nécessite de l'énergie électrique et peut être alimenté par la connexion au réseau électrique et/ou par l'accumulateur (5).

11. Utilisation du système (1) selon l'une des revendications précédentes en tant que support pour un emplacement de stationnement, la partie de paroi du récipient servant de partie de la surface de l'emplacement de stationnement.

12. Utilisation du système (1) selon l'une des revendications 1 à 10, dans laquelle le système fait partie d'une voie de circulation, la partie de paroi du réservoir formant une partie de la surface de la voie de circulation.

13. Procédé d'installation du système (1) selon l'une des revendications 1 à 10 dans un sol, une fosse étant creusée et le système (1) étant mis en place dans la fosse.
